# EUROPEAN PATENT APPLICATION

(11) **EP 4 657 734 A1**
(43) Date of publication of application: **03.12.2025**
(21) Application number: 24178343.0
(22) Date of filing: 28.05.2024
(51) Int. Cl.: H02M 1/34, H02M 3/00, H05B 45/30, H02M 3/335

(54) **OSCILLATIONS SUPPRESSION DURING OFF-TIME PERIODS OF A LF PWM MODULATED RESONANT ISOLATED CONVERTER FOR LED SUPPLY**

(71) Applicant: Tridonic GmbH & Co. KG, 6851 Dornbirn (AT)
(72) Inventor: Afzali Arani, Sayed Reza, 6850 Dornbirn (AT); Ramezan Ghanbari, Dr., Alireza, 6850 Dornbirn (AT)
(74) Representative: Rupp, Christian

(57) **Abstract**

A converter (10) for supplying an LED-based load is provided. Said converter (10) is an isolated converter (10) having a transformer (11) defining a primary side (12a) and a secondary side (12b) of the converter (10). Said converter (10) further comprises at least one switch (13a, 13b) and a resonance circuitry (14) on the primary side (12a) of the converter (10). Said converter (10) further comprising a snubber circuit (15), preferably a RC snubber circuit. Said snubber circuit (15) has an ancillary winding (16) on the secondary side (12b) of the transformer (11), and a snubber switch (17) arranged for enabling and/or disabling the operation of the snubber circuit (15), the snubber switch (17) being controlled via a signal from a control unit (18) arranged on the primary side (12a) of the converter (10).

## Description

The invention relates to suppressing oscillations during off-time periods of a LF PWM modulated resonant isolated converter supplying an LED-based load. In particular, the invention relates to a converter for supplying an LED-based load, a system comprising such a converter and an LED-based load supplied by said converter, a method for suppressing oscillations during off-time periods of a LF PWM modulated resonant isolated converter supplying an LED-based load, and an ASIC arranged to issue a LF PWM (Low Frequency Pulse Width Modulation) signal and to perform said method.

Generally, in times of an increasing usage of LEDs, especially for lighting purposes, there is a growing need of converters for supplying such LEDs in a particularly efficient and reliable manner.

Accordingly, there is an object to provide a converter for supplying an LED-based load, a system comprising such a converter and an LED-based load supplied by said converter, a method for suppressing oscillations during off-time periods of a LF PWM modulated resonant isolated converter supplying an LED-based load, and an ASIC arranged to issue a LF PWM signal and to perform said method, wherein a particularly high efficiency and reliability are ensured, especially in the sense of cost-effectively reducing or eliminating resonant current oscillation effects, typically in the context of dimming an LED-based load, after switching off, preferably via an LF PWM pulse, the corresponding high frequency switching.

This object is solved by the features of claim 1 for a converter for supplying an LED-based load, the features of claim 5 for a system comprising such a converter and an LED-based load supplied by said converter, the features of claim 6 for a method for suppressing oscillations during off-time periods of a LF PWM modulated resonant isolated converter supplying an LED-based load, and the features of claim 7 for an ASIC arranged to issue a LF PWM signal and to perform said method. The dependent claims contain further developments.

According to a first aspect of the invention, a converter for supplying an LED-based load is provided. Said converter is an isolated converter having a transformer defining a primary side and a secondary side of the converter. Said converter further comprises at least one switch and a resonance circuitry on the primary side of the converter. Said converter further comprises a snubber circuit, preferably a RC snubber circuit. Said snubber circuit has an ancillary winding on the secondary side of the transformer, and a snubber switch arranged for enabling and/or disabling the operation of the snubber circuit, the snubber switch being controlled via a signal from a control unit arranged on the primary side of the converter. Advantageously, this allows for cost-effectively reducing or eliminating output current oscillation effects, typically in the context of dimming an LED-based load, after switching off, preferably via an LF PWM pulse, the corresponding high frequency switching.

According to an implementation form of the first aspect of the invention, the at least one primary side switch is controlled for a HF (High Frequency) switching modulated by a LF PWM (Low Frequency Pulse Width Modulation) signal with variable duty cycle for achieving a dimming of an LED-based load supplied by the converter, wherein the control unit is arranged for sending said signal in order to activate the snubber circuit in the off-time periods of the LF PWM signal and to deactivate the snubber circuit in the on-time periods of the LF PWM signal. Advantageously, for instance, during activation of the snubber circuit, the snubber circuit or the corresponding elements thereof, respectively, dissipate the oscillation energy.

According to a further implementation form of the first aspect of the invention, the control unit is arranged to issue the LF PWM signal. Advantageously, for example, cost-efficiency can be increased.

According to a further implementation form of the first aspect of the invention, the control unit comprises or is a microcontroller and a further control circuit, preferably an ASIC (Application-Specific Integrated Circuit), receiving the LF PWM signal in order to control the HF switch operation of the at least one primary side switch in the on-time periods of said LF PWM signal. Advantageously, for instance, manufacturing costs can be reduced.

According to a second aspect of the invention, a system is provided. Said system comprises a converter according to the first aspect of the invention or any of its implementation forms, respectively, and an LED-based load supplied by said converter. Advantageously, this allows for cost-effectively reducing or eliminating the resonant current oscillation effects, typically in the context of dimming an LED-based load, after switching off, preferably via an LF PWM pulse, the corresponding high frequency switching.

According to a third aspect of the invention, a method for suppressing oscillations during off-time periods of a LF PWM modulated resonant isolated converter supplying an LED-based load is provided. Said method comprises the step of selectively activating a snubber circuit on the secondary side of the isolated converter during off-time periods of the LF PWM signal. Advantageously, this allows for cost-effectively reducing or eliminating resonant current oscillation effects, typically in the context of dimming an LED-based load, after switching off, preferably via an LF PWM pulse, the corresponding high frequency switching.

With respect to the term "LF PWM modulated resonant isolated converter", it is noted that said term may especially be understood as a HF (high frequency) resonant converter that is controlled by a LF PWM.

According to a fourth aspect of the invention, an ASIC is provided. Said ASIC is arranged to issue a LF PWM signal, preferably with a duty cycle dictated by a dimming command, and to perform the method according to the third aspect of the invention. Advantageously, this allows for cost-effectively reducing or eliminating resonant current oscillation effects, typically in the context of dimming an LED-based load, after switching off, preferably via an LF PWM pulse, the corresponding high frequency switching.

Exemplary embodiments of the invention are now further explained with respect to the drawings by way of example only, and not for limitation. In the drawings:
- Fig. 1: shows an exemplary embodiment of an inventive converter in combination with a system comprising the latter and an LED-based load supplied thereby; and
- Fig. 2: shows a flow chart of an embodiment of the third aspect of the invention.

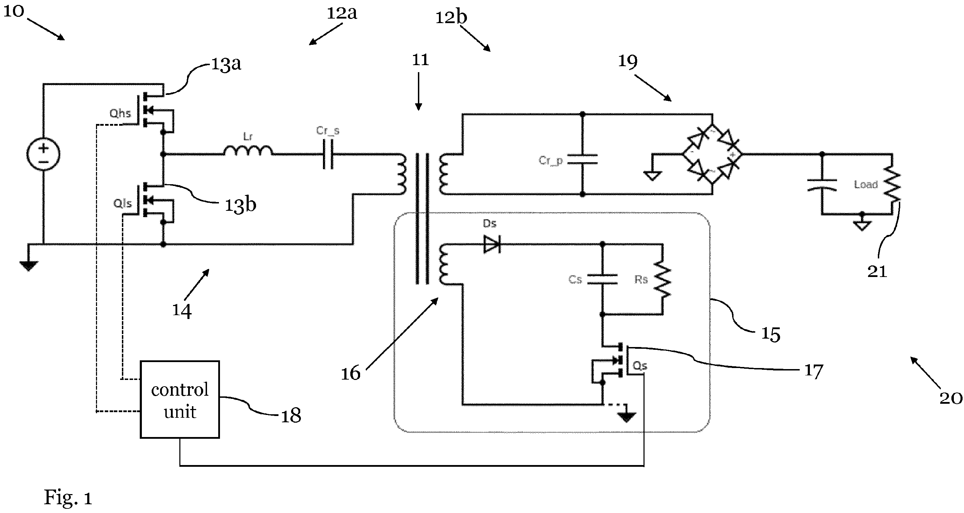

With respect to Fig. 1, a circuit diagram of an exemplary embodiment of a converter 10 for supplying an LED-based load 21 is illustrated.

For the sake of completeness, it is noted that said Fig. 1 also depicts an exemplary embodiment of a system 20 comprising said converter 10 and said LED-based load 21 supplied by the converter 10.

In accordance with Fig. 1, the converter 10 is an isolated converter, exemplarily an LCC converter, having a transformer 11 defining a primary side 12a and a secondary side 12b of the converter 10.

Furthermore, the converter 10 comprises at least one switch, exemplarily two switches 13a, 13b, namely the high-side switch 13a and the low-side switch 13b of the LCC converter or of the half-bridge of the LCC converter, respectively, and a resonance circuitry 14, exemplarily the resonant tank of the LCC converter, on the primary side 12a of the converter 10.

Moreover, the converter 10 comprises a snubber circuit 15, exemplarily a RC snubber circuit. Said snubber circuit 15 has an ancillary winding 16 on the secondary side 12b of the transformer 11, and a snubber switch 17 arranged for enabling and/or disabling the operation of the snubber circuit 15, the snubber switch 17 being controlled via a signal from a control unit 18 arranged on the primary side 12a of the converter 10.

As it can further be seen from Fig. 1, the converter 10 or LCC converter, respectively, in addition to the half-bridge comprising the switches 13a, 13b, the resonant tank 14, and the transformer 11, exemplarily comprises an output rectifier 19, especially comprising four diodes.

With respect to the switches 13a, 13b, it is noted that each of said switches 13a, 13b exemplarily comprises or is an n-channel enhancement-type field-effect transistor.

With respect to the snubber switch 17, it is noted that said snubber switch 17 exemplarily comprises or is an n-channel enhancement-type field-effect transistor.

It is further noted that it might be particularly advantageous if one or each of the switches 13a, 13b is controlled for a HF switching modulated by a LF PWM signal with variable duty cycle for achieving a dimming of the LED-based load 21 supplied by the converter 10. Furthermore, the control unit 18 is arranged for sending said signal, especially via which the snubber switch 17 is controlled, in order to activate the snubber circuit 15 in the off-time periods of the LF PWM signal and to deactivate the snubber circuit 15 in the on-time periods of the LF PWM signal.

In this context, it is noted that it might be particularly advantageous if the control unit 18 is arranged to issue said LF PWM signal.

With respect to the control unit 18, it is noted that it might be particularly advantageous if the control unit 18 comprises or is a microcontroller and a further control circuit, preferably an ASIC, receiving the LF PWM signal in order to control the HF switch operation of one or each of the switches 13a, 13b in the on-time periods of said LF PWM signal.

With respect to the above-mentioned RC snubber circuit, it is noted that as illustrated by Fig. 1, the snubber circuit 15 comprises a resistor and a capacitor. Exemplarily, said resistor and said capacitor are connected in parallel across the ancillary winding 16.

Advantageously, the resistor dissipates the corresponding oscillation energy, while the capacitor provides a path for the oscillations to discharge.

Further advantageously, the corresponding values of the resistor and the capacitor can flexibly be selected based on the characteristics of the frequency of the oscillations which are typically influenced by the characteristics of the primary side resonance circuit 14 or the resonant tank of the LCC converter, respectively.

With respect to the resistor of the snubber circuit 15, it is noted that it might be particularly advantageous if said resistor has a value of 500 ohm or substantially of 500 ohm.

With respect to the capacitor of the snubber circuit 15, it is noted that it might be particularly advantageous if said capacitor has a value of 1 picofarad or substantially of 1 picofarad.

Advantageously, the average power loss of the resistor of the snubber circuit 15 is or substantially is 10 milliwatt.

With respect to the term "substantially" mentioned several times above, it is noted that said term may especially be understood as a corresponding deviation of not more than 20 per cent, preferably not more than 10 per cent, more preferably not more than 5 per cent, most preferably not more than 3 or 1 per cent.

As it can further be seen from Fig. 1, the snubber circuit 15, especially in addition to the snubber switch 17, the above-mentioned resistor, and the above-mentioned capacitor, exemplarily comprises a diode. Exemplarily, said diode is oriented in a manner that the orientation of the diode counteracts the inherent body diode of the circuit or of the snubber switch 17, respectively, so that when the snubber switch 17 is open, especially during LF PWM on-time, the snubber circuit 15 is seen as an infinitive resistive load from the primary winding of the transformer 11 or from the primary side 12a, respectively.

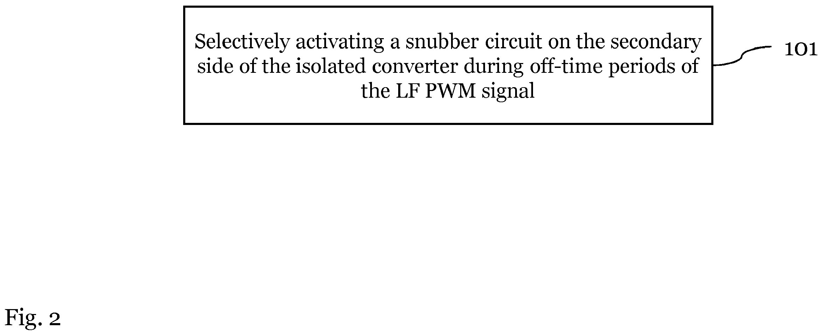

Finally, Fig. 2 shows a flow chart of an embodiment of the method for suppressing oscillations during off-time periods of a LF PWM modulated resonant isolated converter, such as the converter 10 described above, supplying an LED-based load, such as the above-mentioned LED-based load 21. Step 101 comprises selectively activating a snubber circuit, such as the snubber circuit 15 described above, on the secondary side of the isolated converter during off-time periods of the LF PWM signal.

It is noted that it might be particularly advantageous to provide an ASIC, said ASIC arranged to issue a LF PWM signal, preferably with a duty cycle dictated by a dimming command, and to perform said method or step 101, respectively.

While various embodiments of the present invention have been described above, it should be understood that they have been presented by way of example only, and not limitation. Numerous changes to the disclosed embodiments can be made in accordance with the disclosure herein without departing from the spirit or scope of the invention. Thus, the breadth and scope of the present invention should not be limited by any of the above described embodiments. Rather, the scope of the invention should be defined in accordance with the following claims and their equivalents.

Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

## Claims

1. A converter (10) for supplying an LED-based load,
the converter (10) being an isolated converter (10) having a transformer (11) defining a primary side (12a) and a secondary side (12b) of the converter (10),
further comprising at least one switch (13a, 13b) and a resonance circuitry (14) on the primary side (12a) of the converter (10),
further comprising a snubber circuit (15), preferably a RC snubber circuit, having:
- an ancillary winding (16) on the secondary side (12b) of the transformer (11), and
- a snubber switch (17) arranged for enabling and/or disabling the operation of the snubber circuit (15), the snubber switch (17) being controlled via a signal from a control unit (18) arranged on the primary side (12a) of the converter (10).

2. The converter (10) according to claim 1,
wherein the at least one primary side switch (13a, 13b) is controlled for a HF switching modulated by a LF PWM signal with variable duty cycle for achieving a dimming of an LED-based load (21) supplied by the converter (10),
wherein the control unit (18) is arranged for sending said signal in order to activate the snubber circuit (15) in the off-time periods of the LF PWM signal and to deactivate the snubber circuit (15) in the on-time periods of the LF PWM signal.

3. The converter (10) according to claim 2,
wherein the control unit (18) is arranged to issue the LF PWM signal.

4. The converter (10) according to claim 2 or 3,
wherein the control unit (18) comprises or is a microcontroller and a further control circuit, preferably an ASIC, receiving the LF PWM signal in order to control the HF switch operation of the at least one primary side switch (13a, 13b) in the on-time periods of said LF PWM signal.

5. A system (20) comprising:
a converter (10) according to any of the claims 1 to 4, and
an LED-based load (21) supplied by said converter (10).

6. A method for suppressing oscillations during off-time periods of a LF PWM modulated resonant isolated converter supplying an LED-based load, the method comprising the step of:
Selectively activating (101) a snubber circuit on the secondary side of the isolated converter during off-time periods of the LF PWM signal.

7. An ASIC, arranged to issue a LF PWM signal, preferably with a duty cycle dictated by a dimming command, and to perform the method according to claim 6.
